# EUROPÄISCHE PATENTSCHRIFT

(11) **EP 0 929 220 B1**
(45) Veröffentlichungstag und Bekanntmachung des Hinweises auf die Patenterteilung: **23.02.2005**
(21) Anmeldenummer: 97944852.9
(22) Anmeldetag: 08.09.1997
(51) Int. Cl.: A01N 47/36

(54) **KOMBINATIONEN AUS SULFONYLHARNSTOFF-HERBIZIDEN UND SAFENERN**
COMBINATIONS OF SULFONYL UREA HERBICIDES AND SAFENERS
ASSOCIATIONS D'HERBICIDES SULFONYLURES ET DE PHYTOPROTECTEURS

(30) Priorität: 19.09.1996 DE 19638233
(43) Veröffentlichungstag der Anmeldung: 21.07.1999
(60) Teilanmeldung: 04013340.7
(73) Patentinhaber: Bayer CropScience GmbH, 65929 Frankfurt/Main (DE)
(72) Erfinder: BIERINGER, Hermann, D-65817 Eppstein (DE); HACKER, Erwin, D-65239 Hochheim (DE); KEHNE, Heinz, D-65719 Hofheim (DE); WILLMS, Lothar, D-65719 Hofheim (DE)
(86) Internationale Anmeldenummer: PCT/EP1997/004872
(87) Internationale Veröffentlichungsnummer: WO 1998/011781

(56) Entgegenhaltungen:
- EP-A- 0 492 366
- EP-A- 0 502 740
- EP-A- 0 524 394
- EP-A- 0 558 448
- WO-A-94/03064
- WO-A-94/26716
- WO-A-95/07897
- WO-A-95/08919
- WO-A-97/18712

## Beschreibung

Die Erfindung betrifft das technische Gebiet der Pflanzenschutzmittel, insbesondere Wirkstoff-Antidot-Kombinationen (= Wirkstoff-Safener-Kombinationen), die hervorragend für den Einsatz gegen konkurrierende Schadpflanzen in Nutzpflanzenkulturen geeignet sind.

Einige neuere herbizide Wirkstoffe zeigen sehr gute anwendungstechnische Eigenschaften und können in sehr kleinen Aufwandmengen gegen ein breites Spektrum von grasartigen und breitblättrigen Unkräutern eingesetzt werden.

Jedoch sind viele der hochwirksamen Wirkstoffe nicht voll verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen überhaupt nicht oder nur in so geringen Aufwandmengen eingesetzt werden, daß die erwünschte breite herbizide Wirksamkeit gegenüber Schadpflanzen nicht gewährleistet ist. Speziell können das Herbizid der weiter unten definierten Formel (A1) und dessen Salze nicht vollständig selektiv gegen Schadpflanzen in Mais, Reis, Getreide oder einigen anderen Kulturen eingesetzt werden. In WO/97-18712 sind Zusammensetzugen beschrieben, welche Verbindungen der Formel (A1) und bestimmte Safener enthalten können. Einige unserer neuen experimentellen Arbeiten haben nun gezeigt, daß Kulturpflanzen, wie Mais, Reis, Weizen, Gerste und andere, überraschenderweise vor unerwünschten Schäden der erwähnten Herbizide geschützt werden können, wenn sie zusammen mit bestimmten Verbindungen ausgebracht werden, die als Herbizid-Antidots oder Safener wirken.

Gegenstand der Erfindung sind daher Herbizid-Safener-Kombinationen, beispielsweise in Form von herbiziden Mitteln, enthaltend
A) als herbiziden Wirkstoff einen in Getreide wenig oder nur teilweise selektiven Pyridylsulfonylhamstoff der Formel (A1) oder dessen Salze 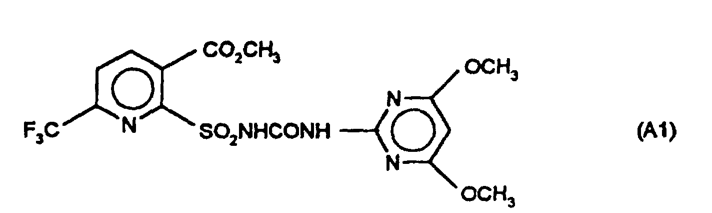 und
B) einen oder mehrere Safener
   a) aus der Gruppe der Verbindungen der Formel (B1), 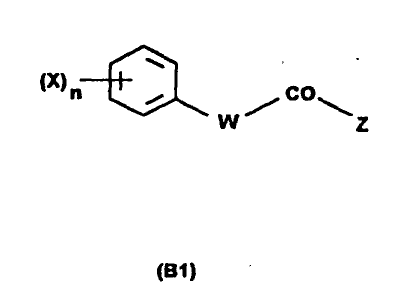 in welchen
      - X: Wasserstoff, Halogen, (C₁-C₄)Alkyl, (C₁-C₄)Alkoxy, Nitro oder (C₁-C₄)Halogenalkyl bedeutet,
      - n: eine ganze Zahl von 1 bis 5, vorzugsweise 1 bis 3 ist,
      - Z: OR¹, SR¹ oder NR¹R² bedeutet oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe in (B1) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise einen Rest der Formel OR¹, NHR² oder N(CH₃)₂, insbesondere der Formel OR¹, bedeutet,
      - R¹: Wasserstoff oder einen unsubstituierten oder substituierten aliphatischen Kohlenwasserstoffrest, vorzugsweise mit insgesamt 1 bis 18 C-Atomen, bedeutet,
      - R²: Wasserstoff, (C₁-C₆)Alkyl, (C₁-C₆)Alkoxy oder gegebenenfalls substituiertes Phenyl bedeutet,
      - W: einen divalenten heterocyclischen Rest aus der Gruppe der teilungesättigten oder heteroaromatischen Fünfring-Heterocyclen mit bis 3 Heteroringatomen des Typs N und O, wobei mindestens ein N- Atom im Ring enthalten ist und ein O-Atom, vorzugsweise einen Rest aus der Gruppe der Reste der Formel (W4) bedeutet,

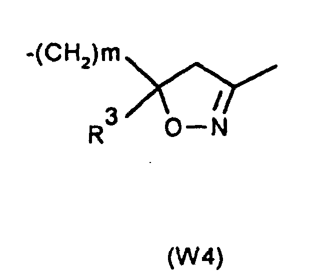

      - R³: Wasserstoff, (C₁-C₈)Alkyl, (C₁-C₈)Halogenalkyl, (C₃-C₁₂)Cycloalkyl oder gegebenenfalls substituiertes Phenyl bedeutet,
      - m: 0 oder 1 bedeutet, oder
   b) aus der Gruppe der hormonartig wirkenden Wachstumsregulatoren (Wuchsstoffe), vorzugsweise der Verbindungen der Formeln (B3) - (B6) oder deren Salze oder Ester, 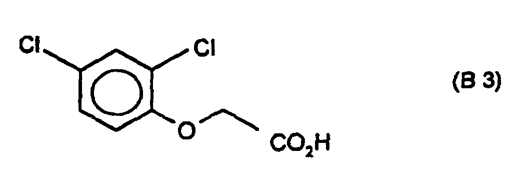 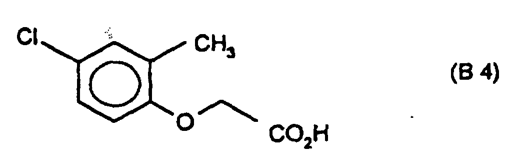 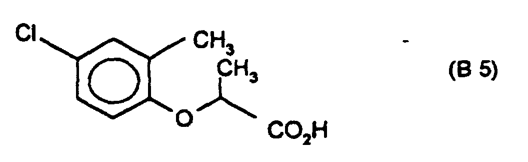 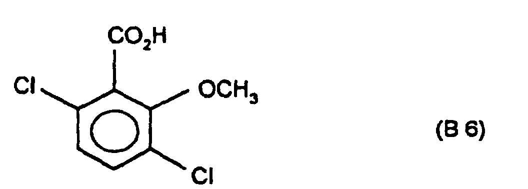 oder
   c) aus einer Kombination der unter a) und b) aufgeführten Safener.

Den genannten Verbindungen der Formeln (B1) und (B3) bis (B6) ist neben der Safenerwirkung in Kombination mit Herbiziden der Formel (A) gemeinsam, daß sie strukturell zu Carbonsäurederivaten der Formel

B* - CO - Z

gehören, worin
- Z: die oben genannte Bedeutung hat und
- B*: einen über eine direkte Bindung oder ein aliphatisches oder heterocyclisches Brückenglied gebundenen (hetero)aromatischen Rest bedeutet.

Sofern es im einzelnen nicht anders definiert wird, gelten für die Reste in den Formeln zu (B1) und nachfolgenden Formeln die folgenden Definitionen:

Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder 1-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Cycloalkyl bedeutet einen cycloaliphatischen Kohlenwasserstoffrest wie Cyclopropyl, Cyclobutyl, Cyclopentyl oder Cyclohexyl usw.; Alkenyl bedeutet z.B. Allyl, 1-Methylprop-2-en-1-yl, 2-Methyl-prop-2-n-1-yl, But-2-en-1-yl, But-3-en-1-yl, 1-Methyl-but-3-en-1-yl und 1-Methyl-but-2-en-1-yl; Cycloalkenyl ist z.B. Cyclopentenyl und Cyclohexenyl; Alkinyl bedeutet z.B. Propargyl, But-2-in-1-yl, But-3-in-1-yl, 1-Methyl-but-3-in-1-yl. "(C₁-C₄)Alkyl" ist die Kurzschreibweise für Alkyl mit 1 bis 4 C-Atomen; entsprechendes gilt für andere allgemeine Restedefinitionen mit in Klammem angegebenen Bereichen für die mögliche Anzahl von C-Atomen. Alkenyl in der Form "(C₃-C₄)Alkenyl" oder "(C₃-C₆)Alkenyl" bedeutet vorzugsweise einen Alkenylrest mit 3 bis 4 bzw. 3 bis 6 C-Atomen, bei dem die Doppelbindung nicht an dem C-Atom liegt, das mit dem übrigen Molekülteil der Verbindung (I) verbunden ist ("yl"-Position). Entsprechendes gilt für (C₃-C₄)Alkinyl usw.

Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Ein Kohlenwasserstoffrest ist ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl; vorzugsweise bedeutet ein Kohlenwasserstoffrest Alkyl, Alkenyl oder Alkinyl mit bis zu 12 C-Atomen oder Cycloalkyl mit 3, 4, 5, 6, 7 oder 8 Ringatomen oder Phenyl; entsprechendes gilt für einen Kohlenwasserstoffrest in einem Kohlenwasserstofioxyrest.

Aryl bedeutet einen monocyclischen, carbocyclischen aromatischen Ring, der im substituierten Fall auch ein bi- oder polycyclisches aromatisches System einschließt, das mindestens einen aromatischen Ring und gegebenenfalls weitere aromatische Ringe oder teilungesättigte oder gesättigte Ringe enthält; Aryl ist beispielsweise Phenyl, Naphthyl, Tetrahydronaphthyl, Indenyl, Indanyl, Pentatenyl, Fluorenyl und ähnliches, vorzugsweise Phenyl;

Heteroaryl oder ein heteroaromatischer Rest bedeutet ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Thienyl, Thiazolyl, Oxazolyl, Isoxazolyl, Furyl, Pyrrolyl, Pyrazolyl und Imidazolyl. Im substituierten Fall werden insbesondere auch bicyclische oder polycyclische aromatische, benzokondensierte oder mit cycloaliphatischen Ringen anellierte Verbindungen, z.B. Chinolinyl, Benzoxazolyl etc. eingeschlossen. Heteroaryl schließt auch einen heteroaromatischen Ring ein, der vorzugsweise 5- oder 6-gliedrig ist und 1,2- oder 3 Heteroringatome, insbesondere aus der Gruppe N, O und S enthält.

Ein heterocyclischer Rest (Heterocyctyl) oder Ring (Heterocyclus) kann gesättigt, ungesättigt oder heteroaromatisch (Heteroaryl) sein; er enthält ein oder mehrere Heteroringätome, vorzugsweise aus der Gruppe N, O und S; vorzugsweise ist er ein nicht aromatischer Ring mit 3 bis 8 Ringatomen und 1 bis 3 Heteroringatomen aus der Gruppe N, O und S oder ist ein heteroaromatischer Ring mit 5 oder 6 Ringatomen und enthält 1, 2 oder 3 Heteroringatome aus der Gruppe N, O und S. Der Rest kann z.B. ein wie oben definierter heteroaromatischer Rest oder Ring sein oder ist ein partiell hydrierter Rest wie Oxiranyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl und Phenyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio,Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino oder Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, mund p-Tolyl, Dimethylphenyle, 2-, 3- und 4-Chlorphenyl, 2-, 3- und 4-Trifluor und -Trichlorphenyl, 2,4-, 3,5-, 2,5- und 2,3-Dichlorphenyl, o-, m- und p-Methoxyphenyl.

Mono- oder disubstituiertes Amino bedeutet einen chemisch stabilen Rest aus der Gruppe der substituierten Aminoreste, weiche beispielsweise durch einen bzw. zwei gleiche oder verschiedene Reste aus der Gruppe Alkyl, Alkoxy, Acyl und Aryl N-substituiert ist; vorzugsweise Monoalkylamino, Dialkylamino, Acylamino, Arylamino, N-Alkyl-N-arylamino sowie N-Heterocyclen; dabei sind Alkylreste mit 1 bis 4 C-Atomen bevorzugt; Aryl ist dabei vorzugsweise Phenyl oder substituiertes Phenyl; für Acyl gilt dabei die weiter unten genannte Definition, vorzugsweise (C₁-C₄)Alkanoyl. Entsprechenes gilt für substituiertes Hydroxylamino oder Hydrazino.

Ein Acylrest bedeutet den Rest einer organischen Säure, z.B. den Rest einer Carbonsäure und Reste davon abgeleiteter Säuren wie der Thiocarbonsäure, gegebenenfalls N-substituierter Iminocarbonsäuren, oder der Rest von Koh!ensauremonoestem, gegebenenfalls N-substituierter Carbaminsäure. Sulfonsäuren, Sulfinsäuren, Phosphonsäuren, Phosphinsäuren. Acyl bedeutet beispielsweise Formyl, Alkylcarbonyl wie [(C₁-C₄)Alkyl]-carbonyl, Phenylcarbonyl, wobei der Phenylring substituiert sein kann, z.B. wie oben für Phenyl gezeigt, oder Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren.

Von den Formeln (B1) und (B5) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Formeln umfassen auch Tautomere der bezeichneten Verbindungen, soweit sie durch Protonenwanderung entstehen und soweit sie chemisch stabile Tautomere sind.

Die Verbindungen der Formel (A1) und (B3) bis (86) sowie gegebenenfalls (B1), wenn sie freie Carboxygruppen oder andere Gruppen mit aciden Wasserstoffatomen enthalten, können Salze bilden, bei denen der Wasserstoff der -SO₂-NH-Gruppe, der CO₂H-Gruppe oder einer anderen aciden Gruppe durch ein für die Landwirtschaft geeignetes Kation ersetzt wird. Diese Salze sind beispielsweise Metallsalze, insbesondere Alkalimetallsalze oder Erdalkatimetalisalze, insbesondere Natrium- und Kaliumsalze, oder auch Ammoniumsalze oder Salze mit organischen Aminen.

Die Verbindungen der Formel (B1) sind aus EP-A-333 131 (ZA-89/1960), EP-A-269 806 (US-A-4,891,057), EP-A-346 620 (AU-A-89/34951), EP-A-174 562, EP-A-346 620 und den internationalen Patentanmeldungen PCT/EP 90/01966 (WO-91/08202) und PCT/EP 90/02020 (WO-91/07874) sowie der deutschen Patentanmeldung P 43 31 448.1 (WO 95/07897 oder ZA 94/7120) und dort zitierter Literatur bekannt oder können nach oder analog den dort beschriebenen Verfahren hergestellt werden.

Die Verbindungen der Formel (B3) bis (B6) sind pestizide Wirkstoffe, die auch unter den Bezeichnungen 2,4-D (B3), MCPA (B4), Mecoprop (B5) bzw. Dicamba (B6) bekannt sind; siehe z. B. C. Tomlin (Ed.), The Pesticide Manual, 10th ed., The British Crop Protection Council and the Royal Society of Chemistry, 1994. Sie gehören zu den hormonartig wirkenden Wachstumsregulatoren, zu denen als Safener weitere geeignete Verbindungen gehören; vgl. substituierte Phenoxycarbonsäuren (z. B. EP-A-154153, US-A-4668276) u. a.

Als herbizide Wirkstoffe eignen sich erfindungsgemäß die Verbindung der Formel (A1) und deren Salze (nachfolgend auch "Wirkstoffe (A)" genannt), die allein nicht oder nicht optimal in Getreidekulturen, insbesondere Gerste, Mais und/oder Reis eingesetzt werden können, weil sie die Kulturpflanzen zu stark schädigen.

Die Verbindung der Formel (A1) und deren Natriumsalz sind aus EP-A-502740 bekannt (Firmencode: DPX-KE 459 für das Natriumsalz).

Von besonderem Interesse sind erfindungsgemäße Herbizid-Safener-Kombinationen, wobei in den Safenem (B1)
- R¹: Wasserstoff, (C₁-C₁₈)Alkyl, (C₃-C₁₂)Cycloalkyl, (C₂-C₈)Alkenyl oder (C₂-C₈)Alkinyl bedeutet, wobei die vorstehenden C-haltigen Reste unsubstituiert oder ein- oder mehrfach, vorzugsweise bis zu dreifach, durch gleiche oder verschiedene Reste aus der Gruppe enthaltend Halogen, Hydroxy, (C₁-C₈)Alkoxy, (C₁-C₈)Alkylmercapto, (C₂-C₈)Alkenylmercapto, (C₂-C₈)Alkinylmercapto, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄-alkyl)-amino, Carboxy, (C₁-C₈)Alkoxycarbonyl, (C₂-C₈)Alkenyloxycarbonyl, (C₁-C₈)Alkylmercaptocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)alkyl, 1-[(C₁-C₄)Alkylimino]-(C₁-C₄)alkyl, 1-[(C₁-C₄)Alkoxyimino]-(C₁-C₆)-alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-((C₁-C₆)alkyl]-aminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch Halogen, Nitro, (C₁-C₄)Alkoxy oder gegebenenfalls substituiertes Phenyl substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert sind, und Reste der Formeln -SiR'₃, -O-SiR'₃, R'₃Si-(C₁-C₈)-alkoxy, -CO-O-NR'₂, -CO-O-N=CR'₂, -O-N=CR'₂, -N=CR'₂, -O-NR'₂, -NR'₂, -CR"(OR')₂ und -O-(CH₂)ₘCR"(OR')₂, worin die R' in den genannten Formeln unabhängig voneinander Wasserstoff, (C₁-C₄)Alkyl, Phenyl, das unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, oder paarweise eine (C₂-C₆)Alkandiylkette und m = 0 bis 6 bedeuten und R" Wasserstoff oder (C₁-C₄)Alkyl bedeutet, und einen substituierten Alkoxyrest der Formel R^{a}O-CR^{b}R^{c}CR^{d}(OR^{a})-(C₁-C₆)-alkoxy, worin die R^{a} unabhängig voneinander (C₁-C₄)Alkyl oder zusammen gradkettiges oder verzweigtes (C₁-C₆)Alkandiyl und R^{b}, R^{c} und R^{d} unabhängig voneinander Wasserstoff oder (C₁-C₄)Alkyl bedeuten, substituiert sind.

Von besonderem Interesse sind auch erfindungsgemäße Herbizid-Safener-Kombinationen, in welchen in den Safenem der Formel (B1)
- R¹: Wasserstoff, (C₁-C₈)Alkyl oder (C₃-C₇)Cycloalkyl bedeutet, wobei jeder der vorstehenden C-haltigen Reste unsubstituiert ist oder ein- oder mehrfach durch Halogen oder ein- oder zweifach, vorzugsweise einfach durch Reste aus der Gruppe Hydroxy, (C₁-C₄)Alkoxy, Carboxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)alkyl, 1-[(C₁-C₄)Alkylimino]-(C₁-C₄)alkyl, 1-[(C₁-C₄)Alkoxyimino]-(C₁-C₄)alkyl und Reste der Formeln -SiR'₃, -O-N=CR'₂, -N=CR'₂, -NR'₂, und -O-NR'₂, worin die R' in den genannten Formeln unabhängig voneinander Wasserstoff oder (C₁-C₄)Alkyl oder paarweise eine (C₄-C₅)Alkandiylkette bedeuten, substituiert ist,
- R³: Wasserstoff, (C₁-C₈)Alkyl, (C₁-C₆)Halogenalkyl, (C₃-C₇)Cycloalkyl oder Phenyl, das unsubstituiert oder durch einen oder mehrere Reste aus der Gruppe Halogen, Cyano, Nitro, Amino, Mono- und Di-[(C₁-C₄)alkyl]-amino, (C₁-C₄)Alkyl, (C₁-C₄)Haloalkyl, (C₁-C₄)Alkoxy, (C₁-C₄)Haloalkoxy, (C₁-C₄)Alkylthio und (C₁-C₄)Alkylsulfonyl substituiert ist, bedeutet
und/oder
- X: Wasserstoff, Halogen, Methyl, Ethyl, Methoxy, Ethoxy, (C₁ oder C₂)-Halogenalkyl, vorzugsweise Wasserstoff, Halogen oder (C₁ oder C₂)-Halogenalkyl bedeutet.

Bevorzugt sind dabei Safener, in welchen in Formel (B1)
- X: Wasserstoff, Halogen, Nitro oder (C₁-C₄)Halogenalkyl bedeutet,
- n: 1, 2 oder 3 ist und
- Z: einen Rest der Formel OR¹ bedeutet,
- R¹: Wasserstoff, (C₁-C₈)Alkyl oder (C₃-C₇)Cycloalkyl bedeutet, wobei jeder der vorstehenden C-haltigen Reste unsubstituiert ist oder ein- oder mehrfach, vorzugsweise bis zu dreifach durch gleiche oder verschiedene Halogen-Reste oder bis zu zweifach, vorzugsweise bis zu einfach, durch gleiche oder verschiedene Reste aus der Gruppe Hydroxy, (C₁-C₄)Alkoxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)alkyl, 1-[(C₁-C₄)Alkylimino]-(C₁-C₄)alkyl, 1-[(C₁-C₄)Alkoxyimino]-(C₁-C₄)alkyl und Reste der Formeln -SiR'₃, -O-N=R'₂, =N=CR'₂, -NR'₂ und -O-NR'₂ substituiert ist, wobei die Reste R' in den genannten Formeln unabhängig voneinander Wasserstoff oder (C₁-C₄)Alkyl bedeuten oder diese paarweise für (C₄ oder C₅)Alkandiyl stehen,
- R³: Wasserstoff, (C₁-C₈)Alkyl, (C₁-C₆)Halogenalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Alkoxy, Nitro, (C₁-C₄)Haloalkyl und (C₁-C₄)Haloalkoxy substituiert ist, bedeutet und

Besonders bevorzugt sind dabei auch Safener, in weichen in Formel (B1)
- W: (W4) bedeutet,
- X: Wasserstoff, Halogen, Nitro, (C₁-C₄)Alkyl oder (C₁-C₂)Halogenalkyl, vorzugsweise CF₃, oder (C₁-C₄)Alkoxy bedeutet,
- n: 1, 2 oder 3 ist,
- m: 0 oder 1 ist,
- Z: einen Rest der Formel OR¹ bedeutet und
- R¹: Wasserstoff, (C₁-C₄)Alkyl, Carboxy-(C₁-C₄)alkyl oder (C₁-C₄)Alkoxycarbonyl-(C₁-C₄)alkyl, vorzugsweise (C₁-C₄)Alkoxy-CO-CH₂-, (C₁-C₄)Alkoxy-CO-C(CH₃)H-, HO-CO-CH₂- oder HO-CO-C(CH₃)H- bedeutet und
- R³: H, (C₁-C₄)Alkyl, (C₁-C₄)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Haloalkyl, Nitro, Cyano und (C₁-C₄)Alkoxy substituiert ist, bedeutet.

Folgende Gruppen von Verbindungen sind beispielsweise als Safener für die oben erwähnten herbiziden Wirkstoffe (A) geeignet:
a) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (B1-7) oder 5-Phenyl-2-isoxazolin-3-carbonsäureethylester (B1-8) und verwandte Verbindungen, wie sie in WO 91/08202 beschrieben sind, bzw. der 5,5-Diphenyl-2-isoxazolincarbonsäureethylester (B1-9) oder -n-propylester (B1-10) oder der 5-(4-Fluorphenyl)-5-phenyl-2-isoxazolin-3-carbonsäureethylester (B1-11), wie sie in der deutschen Patentanmeldung P 43 31 448.1 (WO-A-95/07897) beschrieben sind.
b) Wirkstoffe vom Typ der Phenoxyessig- bzw. -propionsäurederivate bzw. der aromatischen Carbonsäuren, wie z.B. 2,4-Dichlorphenoxyessigsäure (2,4-D) oder deren Salze oder Ester, 4-Chlor-2-methyl-phenoxy-propionsäure (Mecoprop), MCPA oder deren Salze oder Ester oder 3,6-Dichlor-2-methoxy-benzoesäure (Dicamba) oder deren Salze oder Ester.

Die Safener (Antidote) der Formeln (B1) und (B3) bis (B6), beispielsweise Safener der obengenannten Gruppen a) bis b), reduzieren oder unterbinden phytotoxische Effekte, die beim Einsatz der herbiziden Wirkstoffe (A) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais und andere Gramineen-Kutturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe (A) und die erwähnten Safener können zusammen (als fertige Formulierung oder im Tank-mix-Verfahren) oder in beliebiger Reihenfolge nacheinander ausgebracht werden, wobei ein Unterschied im Applikationszeitpunkt in der Regel vermieden werden sollte, um ein Zusammenwirken beider Wirkstoffe möglichst zu gewährleisten. Das Gewichtsverhältnis Safener: herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Mais und Getreidekulturen wie Weizen, Roggen, Gerste, Hafer, Reis und Sorghum, aber auch Baumwolle und Sojabohne, vorzugsweise Getreide und Mais.

Die Safener der Formeln (B1) und (B3) bis (B6) können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden (A), das dadurch gekennzeichnet ist, daß eine wirksame Menge einer Verbindung der Formel (B1) und (B3) bis (B6) vor, nach oder gleichzeitig mit dem herbiziden Wirkstoff (A) auf die Pflanzen, Pflanzensamen oder die Anbaufläche appliziert wird.

Die Verbindungen der Formeln (B1) und (B3) bis (B6) und deren Kombinationen mit dem herbiziden Wirkstoff können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-ÖI-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugsund Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books. Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthytenoxidaddukfe", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie z. B. Insektiziden, Akariziden, Herbiziden, Fungiziden, sowie mit Safenem, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutytnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahtung mittels handelsüblicher Perlmühlen und gegebenenfalls Zusatz von Tensiden, wie sie z. B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt.

Zur Herstellung von Teller-Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, 'Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, einen oder mehrere Wirkstoffe der Formel (B1) und (B3) bis (B6) oder des Herbizid/Antidot-Wirkstoffgemischs (A) und (B1) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvem beträgt die Wirkstoffkonzentration z.B. etwa 10 bis 90 Gew.-%, der Rest zu 100 Gew.-% besteht aus üblichen Formulierungsbestandteilen. Bei , emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Wirkstoffe in Mischungsformulierungen oder im Tank-Mix sind beispielsweise bekannte Wirkstoffe einsetzbar, wie sie in z.B. aus Weed Research 26, 441-445 (1986), oder "The Pesticide Manual", 10th edition, The British Crop Protection Council and the Royal Soc. of Chemistry, 1994 und dort zitierter Literatur beschrieben sind. Als literaturbekannte Herbizide, die mit den Verbindungen der Formel (I) kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor, acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester, alachlor, alloxydim; ametryn; amidosulfuron; amitrol; AMS, d.h. Ammoniumsulfamat; anilofos; asulam; atrazin; azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofenap; benzofluor; benzoylprop-ethyl; benzthiazuron; bialaphos; bifenox; bromacil; bromobutide; bromofenoxim; bromoxynil; bromuron; buminafos; busoxinone; butachlor; butamifos; butenachlor; buthidazole; butralin; butytate; cafenstrole (CH-900); carbetamide; cafentrazone (ICI-A0051); CDAA, d.h. 2-Chlor-N,N-di-2-propenylacetamid; CDEC, d.h. Diethyldithiocarbaminsäure-2-chlorallylester, chlomethoxyfen; chloramben; chlorazifop-butyl, chlormesulon (ICI-A0051); chlorbromuron; chlorbufam; chlorfenac; chlorflurecol-methyl; chloridazon; chlorimuron ethyl; chlomitrofen; chlorotoluron; chloroxuron; chlorpropham; chlorsulfuron; chlorthal-dimethyl; chlorthiamid; cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-DB; dalapon; desmedipham; desmetryn; di-allate; dichlobenil; dichlorprop; diclofop und dessen Ester wie diclofop-methyl; diethatyl; difenoxuron; difenzoquat; diflufenican; dimefuron; dimethachlor; dimethametryn; dimethenamid (SAN-582H); dimethazone, clomazon; dimethipin; dimetrasulfuron, dinitramine; dinoseb; dinoterb; diphenamid; dipropetryn, diquat; dithiopyr, diuron; DNOC; eglinazine-ethyl; EL 77, d.h. 5-Cyano-1-(1,1-dimethylethyl)-N-methyl-1H-pyrazole-4-carboxamid; endothal; EPTC; esprocarb; ethalfluralin; ethametsulfuron-methyl; ethidimuron; ethiozin; ethofumesate; F523.1, d.h. N-[2-Chlor-4-fluor-5-[4-(3-fluorpropyl)-4,5-dihydro-5-oxo-1 H-tetrazol-1-yl]-phenyl]-ethansulfonamid; ethoxyfen und dessen Ester (z.B. Ethylester, HN-252); etobenzanid (HW 52); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; fluazifop und fluazifop-P und deren Ester, z.B. fluazifop-butyl und fluazifop-P-butyl; fluchloratin; flumetsulam; flumeturon; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fomesafen; fosamine; furyloxyfen; glufosinate; glyphosate; halosafen; halosulfuron und dessen Ester (z.B. Methylester, NC-319); haloxyfop und dessen Ester; hatoxyfop-P (= R-haloxyfop) und dessen Ester, hexazinone; imazamethabenz-methyl; imazapyr; imazaquin und Salze wie das Ammoniumsalz; imazethamethapyr; imazethapyr, imazosulfuron; ioxynil; isocarbamid; isopropalin; isoproturon; isouron; isoxaben; isoxapyrifop; karbutilate; lactofen; lenacil; linuron; MCPB; mefenacet; mefluidid; metamitron; metazachlor, methabenzthiazuron; metham; methazole; methoxyphenone; methyldymron; metabenzuron, methobenzuron; metobromuron; metolachlor, metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxyfluorfen; paraquat; pebulate; pendimethalin; perfluidone; phenisopham; phenmedipham; picloram; piperophos; piributicarb; pirifenop-butyl; pretilachlor, primisulfuron-methyl; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyrazotinate; pyrazon; pyrazosulfuron-ethyl; pyrazoxyfen; pyridate; pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d:h. 2-([7-[2-Ch)or-4-(triftuor-methyt)-phenoxy]-2-naphthalenyl]-oxy]-propansäure und -methylester; sulfentrazon (FMC-97285, F-6285); sulfazuron; sulfometuron-methyl; sulfosate (ICI-A0224); sulfosulfuron (MON 37500); TCA; tebutam (GCP-5544); tebuthiuron; terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-24085); thifensulfuron-methyl; thiobencarb; tiocarbazil; tratkoxydim; tri-attate; triasutfuron; triazofenamide; tribenuron-methyl; trictopyr, tridiphane; trietazine; trifluratin; triflusulfuron und Ester (z.B. Methylester, DPX-66037)-. trimeturon: tsitodef; vernotate; WL 110547, d.h. 5-Phenoxy-1-{3-(trifluormethyl)-phenyl]-1H-tetrazol; UBH-509: D-489; LS 82-556; KPP-300; NC-324; NC-330; KH-218; DPX-N8189; SC-0774; DOWCO-535; DK-8910; V-53482; PP-600; MBH-001: KIH-9201; ET-751: KIH-6127 und KIH-2023.

Zur Anwendung werden die in handelsüblicher Form vorliegenden Formulierungen. gegebenenfalls in üblicher Weise verdünnt z.B. bei Spritzpulvern, emulgierbaren Konzentraten. Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge der erfindungsgemäßen Verbindungen der Formel (A). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

### Folgende Beispiele dienen zur Erläuterung der Erfindung:

A Formulierungsbeispiele
a) Ein Staubmittel wird erhalten, indem man 10 Gew.-Teile einer Verbindung der Formel (B1) und (B3) bis (B6) oder eines Wirkstoffgemischs aus einem herbiziden Wirkstoff (A) und einem Safener der Formel (B1) und (B3) bis (B6) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (B1) und (B3) bis (B6) oder eines Wirkstoffgemischs aus einem herbiziden Wirkstoff (A) und einem Safener der Formel (B1) und (B3) bis (B6), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung der Formel (B1) und (B3) bis (B6) oder eines Wirkstoffgemischs aus einem herbiziden Wirkstoff (A) und einem Safener der Formel (B1) und (B3) bis (B6), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (B1) und (B3) bis (B6) oder eines Wirkstoffgemischs aus einem herbiziden Wirkstoff (A) und einem Safener der Formel (B1) und (B3) bis (B6), 75 Gew.Teilen Cyclohexanon als Lösemittel und 10 Gew.-Teilen oxethyliertes Nonylphenol als Emulgator.
e) Ein in Wasser dispergierbares Granulat wird erhalten indem man

| | |
|---|---|
| 75 Gew.-Teile | einer Verbindung der Formel (B1) und (B3) bis (B6) oder eines Wirkstoffgemischs aus einem herbiziden Wirkstoff (A) und einem Safener der Formel (B1) und (B3) bis (B6), |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten indem man

| | |
|---|---|
| 25 Gew.-Teil(e) | einer Verbindung der Formel (B1) und (B3) bis (B6) oder eines Wirkstoffgemischs aus einem herbiziden Wirkstoff (A) und einem Safener der Formel (B1) und (B3) bis (B6), |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### Biologische Beispiele

### Beispiel 1

Getreide und verschiedene Unkräuter bzw. Gräser wurden im Gewächshaus in Papiertöpfen von 9 cm Durchmesser auf sandigem Lehmboden bis zum Wuchsstadium von 3-4 Blättern herangezogen und dann mit dem Herbizid bzw. der entsprechenden Herbizid-Safener-Kombination behandelt, wobei eine Wasseraufwandmenge von 300 Uha ausgebracht wurde.
Vier Wochen nach Behandlung wurden die Pflanzen visuell auf jede Art von Schädigung durch die ausgebrachten Wirkstoffe bonitiert, wobei insbesondere das Ausmaß der anhaltenden Wachsstumsbeeinträchtigung berücksichtigt wurde.
Die Bewertung erfolgte nach einer Prozentskala (0 -100 %) im Vergleich zur unbehandelten Kontrolle.

Die Ergebnisse der Versuche zeigen, daß die erfindungsgemäßen Safener die Phytotoxizität der Herbizide verhindern, ohne die herbizide Wirksamkeit gegen Gräser zu beeinträchtigen (siehe Tabelle 1).
Dadurch können die Herbizide ohne Risiko bzw. mit höherer Dosis in Getreide eingesetzt werden, als dies bei alleiniger Anwendung möglich ist.

**Tabelle 1**

| % Schädigung | | | | | | |
|---|---|---|---|---|---|---|
| Herbizid | Safener | Dosis g AS/ha | Weizen | Gerste | ALOMY | SETVI |
| A1 | - | 25 | 40 | 35 | 95 | 85 |
| | | 12 | 35 | 25 | 70 | 85 |
| | | 6 | 30 | 25 | 70 | 70 |
| A1+B1-11 | | 25+25 | 15 | 10 | 95 | 85 |
| | | 12+12 | 0 | 0 | 85 | 80 |
| | | 6+6 | 0 | 0 | 75 | 75 |

Anmerkungen:
- AS =: Aktivsubstanz (= bezogen auf 100% reinen Wirkstoff)
- A1 =: 1-(3-Methoxycarbonyl-6-trifluormethyl-pyridyl-2-ylsulfonyl)-3-(4,6-dimethoxy-pyrimidin-2-yl)-hamstoff, in Form eines wasserdispergierbaren Pulvers, das zur Anwendung mit Wasser verdünnt wurde,
- B1-11 =: 5-(4-Fluorphenyl)-5-phenyl-2-isoxazolin-3-carbonsaüre-ethylester

## Patentansprüche

1. Herbizid-Safener-Kombinationen, enthaltend
A) als herbiziden Wirkstoff eine Verbindung der Formeln (A1) oder deren Salze, 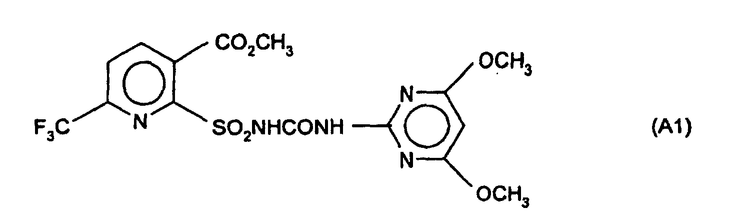 und
B) einen oder mehrere Safener
a) aus der Gruppe der Verbindungen der Formel (B1), 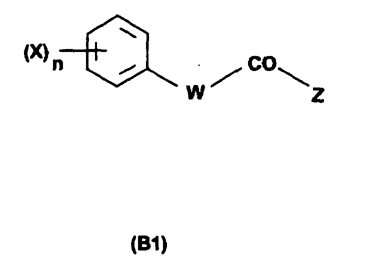 in welchen
X Wasserstoff, Halogen, (C₁-C₄)Alkyl, (C₁-C₄)Alkoxy, Nitro oder (C₁-C₄)Halogenalkyl bedeutet,
Z OR¹, SR¹ oder NR¹R² bedeutet oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe in (B1) verbunden ist und unsubstituiert oder durch Reste aus der Gruppe (C₁-C₄)Alkyl, (C₁-C₄)Alkoxy oder gegebenenfalls substituiertes Phenyl substituiert ist, bedeutet,
R¹ Wasserstoff oder einen unsubstituierten oder substituierten aliphatischen Kohlenwasserstoffrestbedeutet,
R² Wasserstoff, (C₁-C₆)Alkyl, (C₁-C₆)Alkoxy oder gegebenenfalls substituiertes Phenyl bedeutet,
n eine ganze Zahl von 1 bis 5,
W einen divalenten heterocyclischen Rest aus der Gruppe der teilungesättigten oder heteroaromatischen Fünfring-Heterocyclen mit bis 3 Heteroringatomen des Typs N und O, wobei mindestens ein N- Atom im Ring enthalten ist und ein O-Atom,
oder
b) aus der Gruppe der hormonartig wirkenden Wachstumsregulatoren (Wuchsstoffe) oder
c) aus einer Kombination der unter a) und b) aufgeführten Safener.

2. Herbizid-Safener-Kombinationen nach Anspruch 1, **dadurch gekennzeichnet, daß**
a) ein Safener der Formel (B1), wobei W in Formel (B1) einen Rest der Formel (W4) bedeutet, 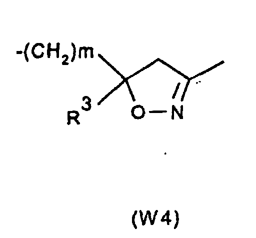
R³ Wasserstoff, (C₁-C₈)Alkyl, (C₁-C₈)Halogenalkyl, (C₃-C₁₂)Cycloalkyl oder gegebenenfalls substituiertes Phenyl bedeutet,
m 0 oder 1 bedeutet, oder
b) ein Safener aus der Gruppe der hormonartig wirkenden Wachstumsregulatoren (Wuchsstoffe) der Formeln (B3) - (B6) oder deren Salze oder Ester 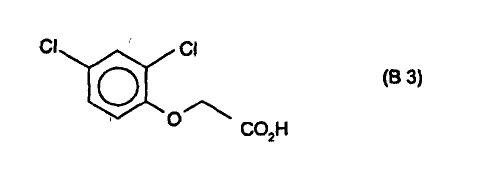 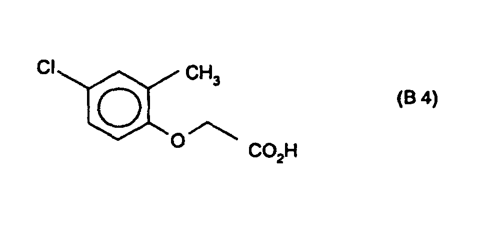 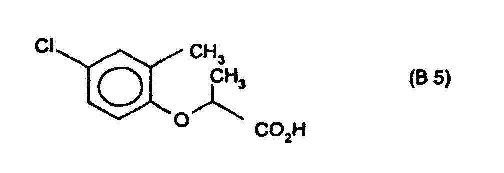 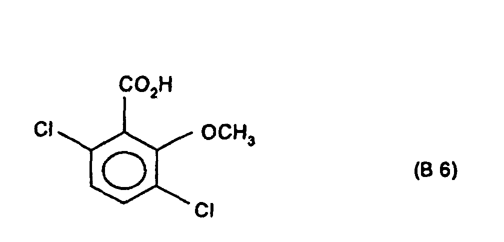 oder
c) eine Kombination aus den unter a) und b) aufgeführten Safenem enthalten ist.

3. Herbizid-Safener-Kombination nach Anspruch 2, **dadurch gekennzeichnet, daß** in den Safenem (B1)
R¹ Wasserstoff, (C₁-C₁₈)Alkyl, (C₃-C₁₂)Cycloalkyl, (C₂-C₈)Alkenyl oder (C₂-C₈)Alkinyl bedeutet, wobei die vorstehenden C-haltigen Reste unsubstituiert oder ein- oder mehrfach durch gleiche oder verschiedene Reste aus der Gruppe enthaltend Halogen, Hydroxy, (C₁-C₈)Alkoxy, (C₁-C₈)Alkylmercapto, (C₂-C₈)Alkenylmercapto, (C₂-C₈)Alkinylmercapto, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄-alkyl)-amino, Carboxy, (C₁-C₈)Alkoxycarbonyl, (C₂-C₈)Alkenyloxycarbonyl, (C₁-C₈)Alkylmercaptocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)alkyl, 1-[(C₁-C₄)Alkylimino]-(C₁-C₄)alkyl, 1-[(C₁-C₄)Alkoxyimino]-(C₁-C₆)alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-[(C₁-C₆)alkyl]-aminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch Halogen, Nitro, (C₁-C₄)Alkoxy oder gegebenenfalls substituiertes Phenyl substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)alkoxycarbonyl, Phenoxy, Phenoxy-(C₁-C₆)-alkoxy, Phenoxy-(C₁-C₆)alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert sind, und Reste der Formeln -SiR'3, -O-SiR'₃, R'₃Si-(C₁-C₈)-alkoxy, -CO-O-NR'₂, -CO-O- N=CR'₂, -O-N=CR'₂, -N=CR'₂, -O-NR'₂, -NR'₂, -CR"(OR')₂ und -O-(CH₂)ₘCR"(OR')₂, worin die R' in den genannten Formeln unabhängig voneinander Wasserstoff, (C₁-C₄)Alkyl, Phenyl, das unsubstituiert oder ein- oder mehrfach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, oder paarweise eine (C₂-C₆)Alkandiylkette und m = 0 bis 6 bedeuten und R" Wasserstoff oder (C₁-C₄)Alkyl bedeutet, und einen substituierten Alkoxyrest der Formel R^{a}O-CR^{b}R^{c}R^{d}(OR^{a})(C₁-C₆)-alkoxy, worin die R^{a} unabhängig voneinander (C₁-C₄)Alkyl oder zusammen gradkettiges oder verzweigtes (C₁-C₆)Alkandiyl und R^{b}, R^{c} und R^{d} unabhängig voneinander Wasserstoff oder (C₁-C₄)Alkyl bedeuten, substituiert sind.

4. Herbizid-Safener-Kombination nach Anspruch 2 oder 3, **dadurch gekennzeichnet, daß** in den Safenem der Formel (B1)
R¹ Wasserstoff, (C₁-C₈)Alkyl oder (C₃-C₇)Cycloalkyl bedeutet, wobei jeder der vorstehenden C-haltigen Reste unsubstituiert ist oder ein- oder mehrfach durch Halogen oder ein- oder zweifach durch Reste aus der Gruppe Hydroxy, (C₁-C₄)Alkoxy, Carboxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)alkyl, 1-[(C₁-C₄)Alkylimino]-(C₁-C₄)alkyl, 1-[(C₁-C₄)Alkoxyimino)-(C₁-C₄)alkyl und Reste der Formeln -SiR'₃, -O-N=CR'₂, -N=CR'₂, -NR'₂, und -O-NR'₂, worin die R' in den genannten Formeln unabhängig voneinander Wasserstoff oder (C₁-C₄)Alkyl oder paarweise eine (C₄-C₅)Alkandiylkette bedeuten, substituiert ist,
R³ Wasserstoff, (C₁-C₈)Alkyl, (C₁-C₆)Halogenalkyl, (C₃-C₇)Cycloalkyl oder Phenyl, das unsubstituiert oder durch einen oder mehrere Reste aus der Gruppe Halogen, Cyano, Nitro, Amino, Mono- und Di-[(C₁-C₄)alkyl]-amino, (C₁-C₄)Alkyl, (C₁-C₄)Haloalkyl, (C₁-C₄)Alkoxy, (C₁-C₄)Haloalkoxy, (C₁-C₄)Alkylthio und (C₁-C₄)Alkylsulfonyl substituiert ist, bedeutet
und/oder
X Wasserstoff, Halogen, Methyl, Ethyl, Methoxy, Ethoxy, (C₁ oder C₂)-Halogenalkyl bedeutet.

5. Herbizid-Safener-Kombination nach einem der Ansprüche 2 bis 4, **dadurch gekennzeichnet, daß** in dem Safener der Formel (B1)
X Wasserstoff, Halogen, Nitro oder (C₁-C₄)Halogenalkyl bedeutet,
n 1, 2 oder 3 ist und
Z einen Rest der Formel OR¹ bedeutet,
R¹ Wasserstoff, (C₁-C₈)Alkyl oder (C₃-C₇)Cycloalkyl bedeutet, wobei jeder der vorstehenden C-haltigen Reste unsubstituiert ist oder ein- oder mehrfach durch gleiche oder verschiedene Halogen-Reste oder bis zu zweifach durch gleiche oder verschiedene Reste aus der Gruppe Hydroxy, (C₁-C₄)Alkoxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)alkyl, 1-[(C₁-C₄)Alkylimino)-(C₁-C₄)alkyl, 1-[(C₁-C₄)Alkoxyimino]-(C₁-C₄)alkyl und Reste der Formeln -SiR'₃, -O-N=R'₂, -N=CR'₂, -NR'₂ und -O-NR'₂ substituiert ist, wobei die Reste R' in den genannten Formeln unabhängig voneinander Wasserstoff oder (C₁-C₄)Alkyl bedeuten oder diese paarweise für (C₄ oder C₅)Alkandiyl stehen, und
R³ Wasserstoff, (C₁-C₈)Alkyl, (C₁C₆)Halogenalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Alkoxy, Nitro, (C₁-C₄)Haloalkyl und (C₁-C₄)Haloalkoxy substituiert ist, bedeutet.

6. Herbizid-Safener Kombination nach einem der Ansprüche 1 bis 5, **dadurch gekennzeichnet, daß** sie in Form einer Zubereitung (herbizides Mittel) formuliert ist und 0,1 bis 95 Gew.-% Wirkstoffe (A) und (B) und 1 bis 99,9 Gew.-% üblicher Formulierungsmittel enthält.

7. Herbizid-Safener-Kombination nach einem der Ansprüche 1 bis 6, **dadurch gekennzeichnet, daß** sie die Wirkstoffe (A) und (B) im Gewichtsverhältnis von 1:100 bis 100:1 enthält.

8. Verfahren zum Schutz von Kulturpflanzen vor phytotoxischen Nebenwirkungen von Herbiziden (A), **dadurch gekennzeichnet, daß** eine wirksame Menge eines Safeners (B) vor, nach oder gleichzeitig mit dem Herbizid (A) auf die Pflanzen, Pflanzenteile, Pflanzensamen oder die Anbaufläche appliziert wird, wobei die Kombination aus Herbizid (A) und Safener (B) nach einem der Ansprüche 1 bis 7 definiert ist.

9. Verwendung der Safener (B) zum Schützen von Kulturpflanzen gegen phytotoxische Nebenwirkungen von Herbiziden (A), wobei die Herbizid-Safener-Kombination (A) + (B) nach einem der Ansprüche 1 bis 7 definiert ist.

## Claims

1. A herbicide/safener combination, which comprises
A) as herbicidally active compound a compound of the formula (A1) or a salt thereof 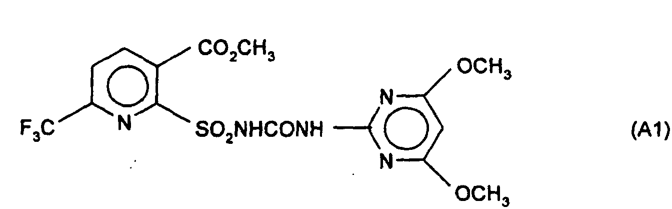 and
B) one or more safeners
a) from the group of the compounds of the formulae (B1), 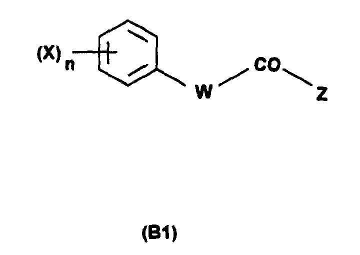 in which
X is hydrogen, halogen, (C₁-C₄)alkyl, (C₁-C₄)alkoxy, nitro or (C₁-C₄)haloalkyl,
Z is OR¹, SR¹ or NR¹R² or is a saturated or unsaturated 3- to 7-membered heterocycle having at least one nitrogen atom and up to 3 hetero atoms which is linked to the carbonyl group in (B1) via the nitrogen atom and which is unsubstituted or substituted by radicals from the group consisting of (C₁-C₄)alkyr, (C₁-C₄)alkoxy or phenyl with or without substitution,
R¹ is hydrogen or an unsubstituted or substituted aliphatic hydrocarbon radical,
R² is hydrogen, (C₁-C₆)alkyl, (C₁-C₆)alkoxy or phenyl with or without substitution,
n is an integer from 1 to 5,
W is a divalent heterocyclic radical from the group of the partially unsaturated or heteroaromaticfive-membered heterocycles having up to 3 hetero ring atoms of the type N and O, at least one nitrogen atom being present in the ring and one oxygen atom,
or
b) from the group of the hormonal growth regulators (auxins) or
c) from a combination of the safeners listed under a) and b).

2. The herbicide/safener combination as claimed in claim 1, which comprises
a) a safener of the formula (B1), W in the formula (B1) being a radical of the formula (W4), 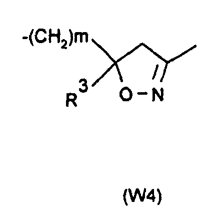
R³ is hydrogen, (C₁-C₈)alkyl, (C₁-C₈)haloalkyl, (C₃-C₁₂)cycloalkyl or phenyl with or without substitution,
and
m is 0 or 1, or
b) a safener from the group of the hormonal growth regulators (auxins) of the formulae (B3) - (B6) or salts or esters thereof 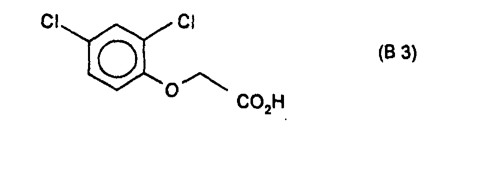 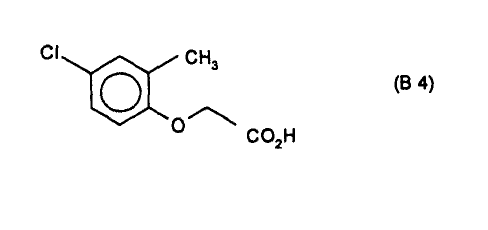 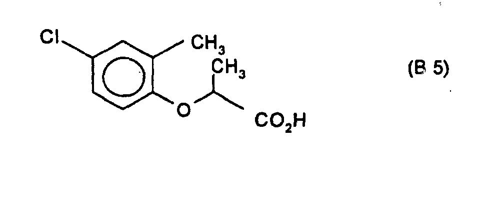 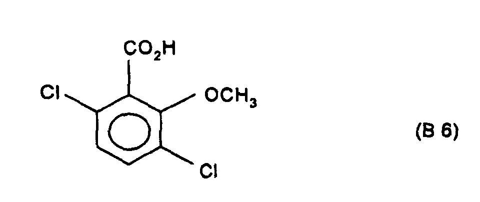 or
c) a combination of the safeners listed under a) and b).

3. The herbicide/safener combination as claimed in claim 2, wherein in the safeners (B1)
R¹ is hydrogen, (C₁-C₁₈)alkyl, (C₃-C₁₂)cycloalkyl, (C₂ C₈)alkenyl or (C₂-C₈)alkynyl where the abovementioned carbon-containing radicals, are unsubstituted or mono- or polysubstituted by identical or different radicals from the group consisting of halogen, hydroxyl, (C₁-C₈)alkoxy, (C₁-C₈)alkylmercapto, (C₂-C₈)alkenylmercapto, (C₂-C₈)alkynylmercapto, (C₂-C₈)alkenyloxy, (C₂-C₈)alkynyloxy, (C₃-C₇)cycloalkyl, (C₃-C₇)cycloalkoxy, cyano, mono- and di-(C₁-C₄-alkyl)amino, carboxy, (C₁-C₈)alkoxycarbonyl, (C₂-C₈)alkenyloxycarbonyl, (C₁-C₈)alkylmercaptocarbonyl, (C₂-C₈)alkynyloxycarbonyl, (C₁-C₈)alkylcarbonyl, (C₂-C₈)alkenylcarbonyl, (C₂-C₈)alkynylcarbonyl, 1-(hydroxyimino)-(C₁-C₆)alkyl, 1-[(C₁-C₄)alkylimino]-(C₁-C₄)alkyl, 1-[(C₁-C₄)alkoxyimino]-(C₁-C₆)alkyl, (C₁-C₈)alkylcarbonylamino, (C₂-C₈)alkenylcarbonylamino, (C₂-C₈)alkynylcarbonylamino, aminocarbonyl, (C₁-C₈)alkylaminocarbonyl, di-[(C₁-C₆)alkyl]-aminocarbonyl, (C₂-C₆)alkenylaminocarbonyl, (C₂-C₆)alkynylaminocarbonyl, (C₁-C₈)alkoxycarbonylamino, (C₁-C₈)alkylaminocarbonylamino, (C₁-C₆)alkylcarbonyloxy which is unsubstituted or substituted by halogen, nitro, (C₁-C₄)alkoxy or phenyl with or without substitution, (C₂-C₆)alkenylcarbonyloxy, (C₂-C₆)alkynylcarbonyloxy, (C₁-C₈)alkylsulfonyl, phenyl, phenyl-(C₁-C₆)-alkoxy, phenyl-(C₁-C₆)-alkoxycarbonyl, phenoxy, phenoxy-(C₁-C₈)-alkoxy, phenoxy-(C₁-C₆)-alkoxycarbonyl, phenylcarbonyloxy, phenylcarbonylamino, phenyl-(C₁-C₆)-alkylcarbonylamino, where the last 9 radicals are unsubstituted or mono- or polysubstituted at the phenyl ring by identical or different radicals from the group consisting of halogen, (C₁-C₄)alkyl, (C₁-C₄)alkoxy, (C₁-C₄)haloalkyl, (C₁-C₄)haloalkoxy and nitro, and radicals ofthe formulae -SiR'₃, -O-SiR'₃, R'₃Si-(C₁-C₈)-alkoxy, -CO-O-NR'₂, -CO-O-N=CR'₂, -O-N=CR'₂, -N=CR'₂, -O-NR'₂, -NR'₂, -CR"(OR')₂ and -O-(CH₂)ₘCR"(OR')₂, where the R' in the abovementioned formulae independently of one another are each hydrogen, (C₁-C₄)alkyl, phenyl which is unsubstituted or mono- or polysubstituted by identical or different radicals from the group consisting of halogen, (C₁-C₄)alkyl, (C₁-C₄)alkoxy, (C₁-C₄)haloalkyl, (C₁-C₄)haloalkoxy and nitro, or as a pair are a (C₂-C₆)alkanediyl chain and m = 0 to 6 and R" is hydrogen or (C₁-C₄)alkyl, and a substituted alkoxy radical of the formula R^{a}O-CR^{b}R^{c}CR^{d}(OR^{a})-(C₁-C₆)-alkoxy where the R^{a} independently of one another are each (C₁-C₄)alkyl or together straight-chain or branched (C₁-C₆)alkanediyl and R^{b}, R^{c} and R^{d} independently of one another are each hydrogen or (C₁-C₄)alkyl.

4. The herbicide/safener combination as claimed in claim 2 or 3, wherein in the safeners of the formula (B1)
R¹ is hydrogen, (C₁-C₈)alkyl or (C₃-C₇)cycloalkyl where each of the abovementioned carbon-containing radicals is unsubstituted or mono- or polysubstituted by halogen or mono- or disubstituted by radicals from the group consisting of hydroxyl, (C₁-C₄)alkoxy, carboxy, (C₁-C₄)alkoxycarbonyl, (C₂-C₆)alkenyloxycarbonyl, (C₂-C₆)alkynyloxycarbonyl, 1-(hydroxyimino)-(C₁-C₄)alkyl, 1-[(C₁-C₄)alkylimino]-(C₁-C₄)alkyl, 1-[(C₁-C₄)alkoxyimino]-(C₁-C₄)alkyl and radicals of the formulae -SiR'₃, -O-N=CR'₂, -N=CR'₂, -NR'₂, and -O-NR'₂, where the R' in the abovementioned formulae independently of one another are each hydrogen or (C₁-C₄)alkyl or as a pair a (C₄-C₅)alkanediyl chain,
R³ is hydrogen, (C₁-C₈)alkyl, (C₁-C₆)haloalkyl, (C₃-C₇)cycloalkyl or phenyl which is unsubstituted or substituted by one or more radicals from the group consisting of halogen, cyano, nitro, amino, mono- and di-[(C₁-C₄)alkyl]amino, (C₁-C₄)alkyl, (C₁-C₄)haloalkyl, (C₁-C₄)alkoxy, (C₁-C₄)haloalkoxy, (C₁-C₄)alkylthio and (C₁-C₄)alkylsulfonyl, and and/or
X is hydrogen, halogen, methyl, ethyl, methoxy, ethoxy, (C₁ or C₂)-haloalkyl.

5. The herbicide/safener combination as claimed in any of claims 2 to 4, wherein in the safener of the formula (B1)
X is hydrogen, halogen, nitro or (C₁-C₄)haloalkyl,
n is 1, 2 or 3 and
Z is a radical of the formula OR¹,
R¹ is hydrogen, (C₁-C₈)alkyl or (C₃-C₇)cycloalkyl where each of the abovementioned carbon-containing radicals is unsubstituted or mono- or polysubstituted by identical or different halogen radicals or up to disubstituted by identical or different radicals from the group consisting of hydroxyl, (C₁-C₄)alkoxy, (C₁-C₄)alkoxycarbonyl, (C₂-C₆)alkenyloxycarbonyl, (C₂-C₆)alkynyloxycarbonyl, 1-(hydroxyimino)-(C₁-C₄)alkyl, 1-[(C₁-C₄)alkylimino]-(C₁-C₄)alkyl, 1-[(C₁-C₄)alkoxyimino]-(C₁-C₄)alkyl and radicals of the formulae -SiR'₃, -O-N=R'₂, -N=CR'₂, -NR'₂ and -O-NR'₂ where the radicals R' in the abovementioned formulae independently of one another are each hydrogen or (C₁-C₄)alkyl or as a pair are (C₄ or C₅)alkanediyl, and R³ is hydrogen, (C₁-C₈)alkyl, (C₁-C₆)haloalkyl, (C₃-C₇)cycloalkyl or phenyl which is unsubstituted or substituted by one or more radicals from the group consisting of halogen, (C₁-C₄)alkyl, (C₁-C₄)alkoxy, nitro, (C₁-C₄)haloalkyl and (C₁-C₄)haloalkoxy.

6. The herbicide/safener combination as claimed in any of claims 1 to 5, wherein the combination is formulated in the form of a preparation (herbicidal composition) and comprises 0.1 to 95% by weight of active compounds (A) and (B) and 1 to 99.9% by weight of customary formulation auxiliaries.

7. The herbicide/safener combination as claimed in any of claims 1 to 6, wherein the combination comprises the active compounds (A) and (B) in a weight ratio of 1:100 to 100:1.

8. A method of protecting crops against phytotoxic side effects of herbicides (A), which comprises applying an effective amount of a safener (B) before, after or together with the herbicide (A) to the plants, parts of the plants, seeds of plants or the area under cultivation, the combination of herbicide (A) and safener (B) being defined by any of the claims 1 to 7.

9. The use of the safeners (B) for protecting crops against phytotoxic side effects of herbicides (A), the herbicide/safener combination (A) + (B) being defined by any of claims 1 to 7.

## Revendications

1. Combinaisons herbicide-antidote renfermant
A) en tant que matière active herbicide un composé de formules (A1) ou ses sels, 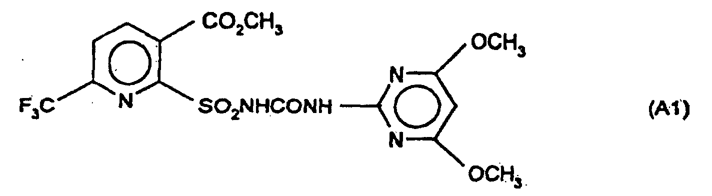 et
B) un ou plusieurs antidotes
a) pris dans le groupe des composés de formule (B1) 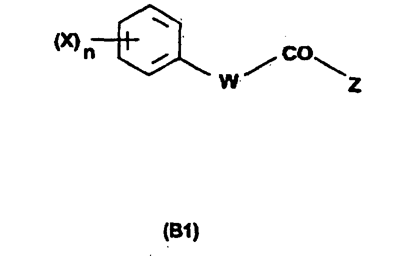 dans laquelle
X représente un atome d'hydrogène, un atome d'halogène, un groupe alkyle en C₁-C₄, alkoxy en C₁-C₄, nitro ou haloalkyle en C₁-C₄,
Z représente un groupe OR¹, SR¹- ou NR¹R² ou un hétérocycle saturé ou insaturé de 3 à 7 chaînons présentant au moins un atome de N et jusqu'à 3 hétéroatomes, qui est lié par l'intermédiaire de l'atome de N au groupe carbonyle dans (B1), et qui est non substitué ou substitué par des restes pris dans le groupe comprenant alkyle en C₁-C₄, alkoxy en C₁-C₄ ou phényle éventuellement substitué,
R¹ représente un atome d'hydrogène ou. un reste hydrocarboné aliphatique non substitué ou substitué,
R² représente un atome d'hydrogène, un groupe alkyle en C₁-C₆, alkoxy en C₁-C₆ ou phényle éventuellement substitué,
n est un entier de 1 à 5,
W représente un reste hétérocyclique bivalent pris dans le groupe comprenant des hétérocycles à 5 chaînons partiellement insaturés ou hétéroaromatiques présentant jusqu'à 3 hétéroatomes du type N et O, au moins un atome de N est contenu dans le cycle, et un atome de O,
ou
b) pris dans le groupe des substances régulatrices ayant un effet d'hormone (substances de croissance)
ou
c) une combinaison des antidotes indiqués aux points a) et b).

2. Combinaisons herbicide-antidote selon la revendication 1, **caractérisées en ce qu'**elles renferment
a) un antidote de formule (B1), W à la formule (B1) représente un reste de formule (W4) 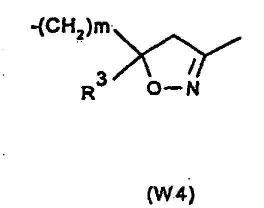
R³ représente un atome d'hydrogène, un groupe alkyle en C₁-C₈, haloalkyle en C₁-C₈, cycloalkyle en C₃-C₁₂ ou phényle éventuellement substitué,
m vaut 0 ou 1, ou
b) un antidote pris dans le groupe des substances régulatrices (substance de croissance) ayant une. action de type hormone de formules (B3) à (B6) ou leurs sels ou esters 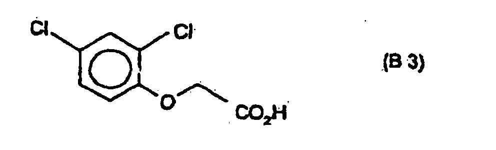 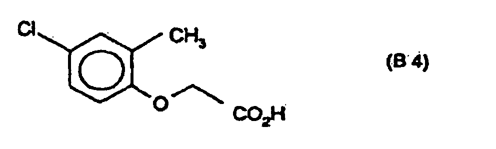 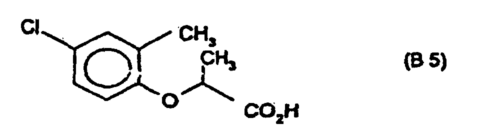 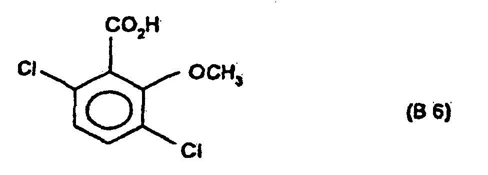 ou
c) une combinaison des antidotes indiqués aux points a) et b).

3. Combinaison herbicide-antidote selon la revendication 2, **caractérisée en ce que** dans les antidotes (B1)
R¹ représente un atome d'hydrogène, un groupe alkyle en C₁-C₁₈, cycloalkyle en C₃-C₁₂, alcényle en C₂-C₈ ou alcynyle en C₂-C₈, les restes carbonés précités sont non substitués ou substitués une ou plusieurs fois par des restes identiques ou différents pris dans le groupe comprenant un atome d'halogène, un groupe hydroxy, alkoxy en C₁-C₈, (alkyl en C₁-C₈)-mercapto, (alcényl en C₂-C₈)mercapto, (alcynyl en C₂-C₈)mercapto, (alcényl en C₂-C₈) oxy, (alcynyl en C₂-C₈) oxy, cycloalkyle en C₃-C₇, cycloalkoxy en C₃-C₇, cyano, mono- et di-(alkyl en C₁-C₄) -amino, carboxy, (alkoxy en C₁-C₈)-carbonyle, (alcényl en C₂-C₈)oxycarbonyle, (alkyl en C₁-C₈)-mercapto-carbonyle, (alcynyl en C₂-C₈) oxycarbonyle, (alkyl en C₁-C₈) carbonyle, (alcényl en C₂-C₈) carbonylé, . (alcynyl en C₂-C₈)-carbonyle, 1-(hydroxyimino)-(alkyle en C₁-C₆), 1-[(alkyl en C₁-C₄) imino- (alkyle en C₁-C₄)], 1-[(alkoxy en C₁-C₄) imino] - (alkyle en C₁-C₆), (alkyl en C₁-C₈)carbonylamino, (alcényl en C₂-C₈) -carbonyl-amino, (alcynyl en C₂-C₈)-carbonylamino, aminocarbonyle, (alkyl en C₁-C₈)-amino-carbonyle, di (alkyl en C₁-C₆) amino- carbonyle, (alcényl en C₂-C₆) aminocarbonyle, (alcynyl en C₂-C₆)-aminocarbonyle, (alkoxy en C₁-C₈) carbonyl-amino, (alkyl en C₁-C₈) amino-carbonylamino, (alkyl en C₁-C₆) carbonyloxy, qui est non substitué ou substitué par un substituant halogène, nitro, alkoxy en C₁-C₄ ou phényle éventuellement substitué, (alcényl en C₂-C₆)-carbonyloxy, (alcynyl en C₂-C₆) carbonyloxy, (alkyl en C₁-C₈) sulfonyle, phényle, phénylalkoxy en C₁-C₆, phényl- (alkoxy en C₁-C₆)-carbonyle, phénoxy, phénoxyalkoxy en C₁-C₆, phénoxy(alkoxy en C₁-C₆)-carbonyle, phényl-carbonyloxy, phénylcarbonyl-amino, phényl(alkyl en C₁-C₆)carbonylamino, les 9 derniers restes cités sont non substitués ou substitués dans le cycle phényle une ou plusieurs fois par des restes identiques ou différents pris dans le groupe comprenant un atome d'halogène, un groupe alkyle en C₁-C₄, alkoxy en C₁-C₄, haloalkyle en C₁-C₄, haloalkoxy en C₁-C₄ et nitro, et des restes de formules. -SiR'₃, -O-SiR'₃, R'₃Si-(alkoxy en C₁-C₈), -CO-O-NR'₂, -CO-O-N=CR'₂, -O-N=CR'₂, -N=CR'₂, -O-NR'₂, -NR'₂, -CR"(OR')₂ et -O-(CH₂)ₘCR"(OR')₂, où les restes R' dans les formules précitées indépendamment les uns des autres représentent un atome d'hydrogène, un groupe alkyle en C₁-C₄, phényle, qui est non substitué ou substitué une ou plusieurs fois par des restes identiques ou différents pris dans le groupe comprenant un atome d'halogène, un groupe alkyle en C₁-C₄, alkoxy en C₁-C₄, haloalkyle en C₁-C₄, haloalkoxy en C₁-C₄ et nitro, ou par paires une chaîne (alcane en C₂-C₆) diyle et m = 0 à 6, et R" représente un atome d'hydrogène ou un groupe alkyle en C₁-C₄, et un reste alkoxy substitué de formule R^{a}O-CR^{b}R^{c}CR^{d} (OR^{a}) - (alkoxy en C₁-C₆) , où les restes R^{a} indépendamment les uns des autres représentent un groupe alkyle en C₁-C₄, ou conjointement représentent un (alcane en C₁-C₆)-diyle linéaire ou ramifié et R^{b}, R^{c} et R^{d} indépendamment les uns des autres représentent un atome d'hydrogène ou groupe alkyle en C₁-C₄.

4. Combinaison herbicide-antidote selon la revendication 2 ou 3, **caractérisée en ce que** dans les antidotes de formule (B1)
R¹ représente un atome d'hydrogène, un groupe alkyle en C₁-C₈ ou cycloalkyle en C₃-C₇, chacun des restes carbonés précités est non substitué ou substitué une ou plusieurs fois par un substituant halogène ou une ou deux fois par des restes pris dans le groupe comprenant hydroxy, alkoxy en C₁-C₄, carboxy, (alkoxy en C₁-C₄) carbonyle, (alcényl en C₂-C₆) oxycarbonyle, (alcynyl en C₂-C₆) oxycarbonyl, 1-(hydroxyimino)-(alkyle en C₁-C₄), 1-[(alkyl en C₁-C₄) imino]-(alkyle en C₁-C₄), 1-[(alkoxy en C₁-C₄) imino]-(alkyle en C₁-C₄) et des restes de formules -SiR'₃, -O-N-CR'₂, -N=CR'₂, -NR'₂ et -O-NR'₂, où les restes R' dans les formules précitées indépendamment les uns des autres représentent un atome d'hydrogène ou un groupe alkyle en C₁-C₄, ou par paires une chaîne (alcane en C₄-C₅)-diyle,
R³ représente un atome d'hydrogène, un groupe alkyle en C₁-C₈, haloalkyle en C₁-C₆, cycloalkyle en C₃-C₇ ou phényle, qui est non substitué ou substitué par un ou plusieurs restes pris dans le groupe comprenant un atome d'halogène, un groupe cyano, nitro, amino, mono- et di-(alkyl en C₁-C₄)-amino, alkyle en C₁-C₄, haloalkyle en C₁-C₄, alkoxy en C₁-C₄, haloalkoxy en C₁-C₄, (alkyl en C₁-C₄) thio et (alkyl en C₁-C₄)-sulfonyle,
et/ou
X représente un atome d'hydrogène, un atome d'halogène, un groupe méthyle, éthyle, méthoxy, éthoxy, haloalkyle en C₁ ou C₂.

5. Combinaison herbicide-antidote selon l'une des revendications 2 à 4, **caractérisée en ce que** dans l'antidote de formule (B1)
X représente un atome d'hydrogène, un atome d'halogène, un groupe nitro ou haloalkyle en C₁-C₄,
n vaut 1, 2 ou 3, et
Z représente un reste de formule OR¹,
R¹ représente un atome d'hydrogène, un groupe alkyle en C₁-C₈ ou cycloalkyle en C₃-C₇, chacun des restes carbonés précités est non substitué ou substitué une ou plusieurs fois par des restes halogène identiques ou différents ou jusqu'à deux fois par des restes identiques ou différents pris dans le groupe comprenant hydroxy, alkoxy en C₁-C₄, (alkoxy en C₁-C₄)-carbonyle, (alcényl en C₂-C₆)oxycarbonyle, (alcynyl en C₂-C₆)oxycarbonyle, 1-(hydroxyimino) - (alkyle en C₁-C₄), 1-[(alkyl en C₁-C₄) imino] -(alkyle en C₁-C₄), 1-[(alkoxy en C₁-C₄)-imino] - (alkyle en C₁-C₄) et des restes de formules -SiR'₃, -O-N=CR'₂, -N=CR'₂, -NR'₂ et -O-NR'₂, où les restes R' dans les formules précitées indépendamment les uns des autres représentent un atome d'hydrogène ou un groupe alkyle en C₁-C₄, ou par paires représentent une chaîne (alcane en C₄ ou C₅) diyle, et
R³ représente un atome d'hydrogène, un groupe alkyle en C₁-C₈, haloalkyle en C₁-C₆, cycloalkyle en C₃-C₇ ou phényle, qui est non substitué ou substitué par un ou plusieurs restes pris dans le groupe comprenant un atome d'halogène, un groupe alkyle en C₁-C₄, alkoxy en C₁-C₄, nitro, haloalkyle en C₁-C₄ et haloalkoxy en C₁-C₄.

6. Combinaison herbicide-antidote selon l'une des revendications 1 à 5, **caractérisée en ce qu'**elle est formulée sous forme d'une préparation (agent herbicide) et renferme de 0,1 à 95 % en masse de principes actifs (A) et (B) et de 1 à 99,9 % en masse d'agents de formulation usuels.

7. Combinaison herbicide-antidote selon l'une des revendications 1 à 6, **caractérisée en ce qu'**elle renferme les principes actifs (A) et (B) dans le rapport pondéral de 1:100 à 100:1.

8. Procédé pour la protection de plantes de culture contre les effets secondaires phytotoxiques des herbicides (A), **caractérisé en ce qu'**on applique une quantité efficace d'un antidote (B) avant, après ou en même temps que l'herbicide (A), aux plantes, aux parties de plantes, à la semence des plantes ou à la surface cultivable, la combinaison constituée par l'herbicide (A) et par l'antidote (B) est définie selon l'une des revendications 1 à 7.

9. Utilisation de l'antidote (B) pour la protection de plantes de culture contre les effets secondaires phytotoxiques des herbicides (A), la combinaison herbicide-antidote (A) + (B) est définie selon l'une des revendications 1 à 7.
